# EUROPÄISCHE PATENTSCHRIFT

(11) **EP 3 266 083 B1**
(45) Veröffentlichungstag und Bekanntmachung des Hinweises auf die Patenterteilung: **26.08.2020**
(21) Anmeldenummer: 15823509.3
(22) Anmeldetag: 22.12.2015
(51) Int. Cl.: H02G 3/22, B60R 16/02

(54) **DICHTUNGSTÜLLE UND KABELDURCHFÜHRUNG MIT EINER DICHTUNGSTÜLLE**
SEALING GROMMET AND CABLE FEEDTHROUGH COMPRISING A SEALING GROMMET
MANCHON D'ÉTANCHÉITÉ ET PASSAGE DE CÂBLE COMPRENANT UN MANCHON D'ÉTANCHÉITÉ

(30) Priorität: 03.03.2015 DE 202015101017 U
(43) Veröffentlichungstag der Anmeldung: 10.01.2018
(73) Patentinhaber: LEONI Bordnetz-Systeme GmbH, 97318 Kitzingen (DE)
(72) Erfinder: KÄFER, Bernd, 97320 Mainstockheim (DE); GRÖTSCH, Matthias, 97318 Kitzingen (DE); HEIN, Gerhard, 97215 Uffenheim (DE); SAUDER, Jörg, 53879 Euskirchen (DE)
(74) Vertreter: FDST Patentanwälte
(86) Internationale Anmeldenummer: PCT/EP2015/080989
(87) Internationale Veröffentlichungsnummer: WO 2016/138975

(56) Entgegenhaltungen:
- DE-A1- 10 332 035
- US-B1- 7 098 401
- US-B1- 7 105 750

## Beschreibung

Die Erfindung betrifft eine Dichtungstülle für eine abgedichtete Durchführung eines strangförmigen Elements durch eine Wandung, insbesondere für eine Kabeldurchführung für den Kraftfahrzeugbereich, welche zum Einsetzen in Montagerichtung in eine durch die Wandung begrenzte Öffnung mit einer vorgegebenen Öffnungsweite ausgebildet ist und einen Tüllenkörper mit einem sich in Montagerichtung erstreckenden Durchsteckbereich aufweist, der bei der Montage in Montagerichtung durch die Öffnung hindurchgeführt wird, derart, dass dieser die Wandung im montierten Zustand hintergreift. Sie betrifft außerdem eine Kabeldurchführung mit einer entsprechenden Dichtungstülle.

Zur Abdichtung einer Kabeldurchführung ist es üblich, über die entsprechenden Kabel oder über einen entsprechenden Kabelstrang eine Tülle oder Dichtungstülle aus einem elastischen Material, wie zum Beispiel Gummi oder einem PU-Schaum, zu stülpen und diese Tülle mitsamt den Kabeln bzw. dem Kabelstrang in den entsprechenden Wandungsdurchbruch der Kabeldurchführung einzusetzen.

Eine solche Tülle ist beispielsweise in der auf die Anmelderin zurückgehenden DE 10 2005 025 780 A1 beschrieben. Diese wird durch Umspritzen, Umgießen oder Umschäumen eines Kabelstranges direkt am Kabelstrang ausgebildet und zudem nicht einfach nur in einen Wandungsdurchbruch gesteckt, sondern mit Hilfe eines die Tülle ergänzenden formstabilen Spannelements gegen den Durchbruch verspannt.

Aus der DE 103 58 002 B4 ist eine weitere Dichtungstülle zu entnehmen, die mittels einer Befestigungshilfe, hier mittels eines Verrastelements, in einem Wandungsdurchbruch fixiert wird. Zudem weist diese Dichtungstülle ein Versteifungselement auf, mit dem sichergestellt wird, dass die Grundform der Dichtungstülle auch im verbauten Zustand erhalten bleibt und Verformungen lediglich im Bereich außenliegender Dichtlippen auftreten. Die Abdichtung erfolgt somit vor allem durch die Dichtlippen.

Eine abgewandelte Ausführung einer entsprechenden Tülle ist der DE 10 2007 051 836 A1 beschrieben. Diese ist für zwei Kabel ausgebildet, die in einem vorgegebenen Abstand zueinander beispielsweise durch eine Gehäusewandung geführt werden sollen. Sie ist als formstabile Baugruppe ausgebildet und dient in erster Linie zur Führung der zwei Kabel und als Befestigungslösung oder Haltevorrichtung. Die eigentliche Abdichtung wird mit Hilfe einer umlaufenden Dichtung realisiert.

Weitere Ausführungsvarianten einer Dichtungstülle sind in der DE 103 32 035 A1, in der US 7,098,401 B1 und in der US 7,105,750 B1 beschrieben.

Unabhängig von der Ausgestaltung einer solchen Tülle gestaltet sich das Einsetzen, Einstecken oder Einpressen in eine Öffnung oder einen Wandungsdurchbruch in der Regel schwierig, da beim Einsetzen häufig relativ hohe Kräfte aufzubringen sind.

Ausgehend hiervon liegt der Erfindung die Aufgabe zugrunde, eine vorteilhafte Möglichkeit zur Abdichtung einer Kabeldurchführung anzugeben.

Diese Aufgabe wird erfindungsgemäß gelöst durch eine Dichtungstülle mit den Merkmalen des Anspruchs 1 sowie durch eine Kabeldurchführung mit den Merkmalen des Anspruchs 14. Bevorzugte Weiterbildungen sind in den rückbezogenen Ansprüchen enthalten. Die im Hinblick auf Dichtungstülle angeführten Vorteile und bevorzugten Ausgestaltungen sind sinngemäß auch auf die Kabeldurchführung übertragbar und umgekehrt.

Eine entsprechende Dichtungstülle ist dabei für eine abgedichtete Durchführung eines strangförmigen Elements durch eine Wandung und insbesondere für eine Kabeldurchführung für den Kraftfahrzeugbereich ausgelegt und als Einsatz für eine Öffnung, eine Materialaussparung oder einen Wandungsdurchbruch ausgestaltet.

Da derartige Öffnungen, Materialaussparungen oder Wandungsdurchbrüche häufig einen kreisförmigen Querschnitt aufweisen oder eine gewisse Rotationssymmetrie zur Einführrichtung oder Einsetzrichtung der Dichtungstülle, weist auch eine hier vorgestellte Dichtungstülle typischerweise einen solchen kreisförmigen Querschnitt oder eine gewisse Rotationssymmetrie auf. Das nachfolgend beschriebene Konzept lässt sich jedoch ohne Weiteres auch auf Öffnungen mit einer abweichenden Geometrie, beispielsweise auf Öffnungen mit ovalem oder mehreckigem Querschnitt, übertragen. Für solche Ausführungsvarianten, die je nach Anwendungszweck als ebenfalls vorteilhafte alternative Ausführungen anzusehen sind, ist dann nicht mehr der eine Durchmesser eine charakteristische Größe, stattdessen sind dann häufig mehrere umfangsseitige Ausdehnungen kennzeichnend für die Dichtungstülle und/oder die Bestandteile der Dichtungstülle.

Unter einer umfangsseitigen Ausdehnung ist dabei im Sinne dieser Anmeldung eine Ausdehnung entlang einer für die jeweilige Geometrie charakteristischen Achse quer zur Einführrichtung, Einsetzrichtung oder Montagerichtung der Dichtungstülle zu verstehen, der eine charakteristische Öffnungsweite der Öffnung zugeordnet ist. Weist die Öffnung beispielsweise einen rechteckigen Querschnitt auf, dann lässt sich die Öffnung durch zwei Öffnungsweiten charakterisieren, die typischerweise als Höhe und Breite der Öffnung bezeichnet werden. Eine für eine solche Öffnung ausgelegte Dichtungstülle weist zwangsläufig ebenfalls zwei charakteristische Ausdehnungen und somit zwei charakteristische Achsen quer zur Montagerichtung der Dichtungstülle auf, also eine Höhe und eine Breite. Bei der Betrachtung von Relationen wird dann stets die Höhe der Dichtungstülle der Höhe der Öffnung gegenübergestellt und die Breite der Dichtungstülle der Breite der Öffnung.

Die Dichtungstülle ist dabei für eine Öffnung mit definierter Geometrie und definierter Öffnungsweite oder definierten Öffnungsweiten ausgelegt und zum Einsetzen in Montagerichtung in eine solche durch eine Wandung begrenzte Öffnung mit vorgegebener Öffnungsweite ausgebildet.

In jedem Fall umfasst die Dichtungstülle hierbei ein Tüllenkörper, mittels dessen die Öffnung abdichtbar ist, sowie ein Hilfselement, welches in erster Linie dazu dient, das Einsetzen der Dichtungstülle und somit des Tüllenkörpers in die Öffnung zu erleichtern. Hierfür weist das Hilfselement einen zumindest eine Gleitfläche umfassenden umfangsseitigen Gleitbereich auf, wobei die zumindest eine Gleitfläche eine umfangsseitige Oberfläche des Tüllenkörpers zumindest teilweise abdeckt oder auf einer umfangseitigen Oberfläche aufliegt, die in einem Bereich liegt, in dem der Tüllenkörper typischerweise eine maximale umfangsseitige Ausdehnung aufweist, die größer oder in etwa gleich der vorgegebenen, dazugehörigen Öffnungsweite der Öffnung ist. Dieser Bereich, nachfolgen als Durchsteckbereich bezeichnet, wird bei der Montage, also dem Einsetzen in die Öffnung, in Montagerichtung durch die Öffnung hindurchgeführt und hierbei gleitet dann die Gleitfläche anstelle der darunterliegenden umfangsseitigen Oberfläche des Tüllenkörpers an der die Öffnung begrenzenden Wandung entlang.

Dabei gilt es zu bedenken, dass für entsprechende Tüllenkörper geeignete Materialen typischerweise hohe Reibungskoeffizienten aufweisen, weswegen beim Einsetzen oder Einfügen entsprechender Tüllenkörper hohe Reibungskräfte auftreten, die dann beim Einsetzen überwunden werden müssen. Das Hilfselement dagegen weist einen Gleitbereich auf, der dem Begriff entsprechend ein leichtgängigeres Gleiten ermöglicht und hierfür einem vergleichsweise geringen Reibungskoeffizienten aufweist, so dass die auftretenden Reibungskräfte beim Einsetzen der Dichtüngstülle im Vergleich zu einer klassischen Dichtung oder einem klassischen Tüllenkörper ohne ein entsprechendes Hilfselement reduziert sind, was das Einsetzen der Dichtungstülle in eine entsprechende Öffnung erleichtert. Dass heißt also, dass die bei der Montage der Dichtungstülle aufzubringenden Montagekräfte bei der hier beschriebenen Dichtungstülle reduziert sind. Der Reibungskoeffizient des Gleitbereichs für Gleitreibung ist dabei vorzugsweise kleiner 0,6 und weiter bevorzugt kleiner 0,2 bei üblichen Wandungsmaterialien rund um die Öffnung oder Materialaussparung.

Der Gleitbereich des Hilfselements wird hierbei zweckdienlicherweise durch die Oberfläche oder Teile der Oberfläche des Hilfselements ausgebildet und dementsprechend wird der verringerte Reibungskoeffizient bevorzugt durch eine geeignete Wahl eines Materials für das Hilfselement vorgegeben. Das Material des Hilfselements ist dabei typischerweise härter als das Material des Tüllenkörpers und die Oberfläche des Hilfselements ist in zumindest den Bereichen, die den Gleitbereich ausbilden, bevorzugt glatt gestaltet.

Für eine einfache Fertigung der Dichtungstülle ist es zudem günstig, wenn das Hilfselement einteilig und einstückig ausgestaltet ist, also zum Beispiel als einstückiges Spritzgussteil oder Gussteil ausgestaltet ist.

Alternativ ist das Hilfselement aus zumindest zwei Hilfselementteilen aufgebaut, die dann vor oder während der Montage zusammengesetzt und typischerweise aneinander befestigt werden, also zum Beispiel miteinander verschweißt oder ineinander gesteckt werden. Günstig ist dabei insbesondere eine Ausgestaltung, bei der das Hilfselement aus zwei insbesondere halbschalenartigen Umfangssegmenten aufgebaut und zusammengesetzt ist, so dass diese bei der Montage, also der Verbindung mit dem Tüllenkörper, umfangsseitig, also nicht in Einführrichtung oder Einsetzrichtung der Dichtungstülle, auf den Tüllenkörper aufgesteckt oder an den Tüllenkörper angelegt und nachfolgend aneinander befestigt werden können. Auf diese Weise gestaltet sich auch die Montage der Dichtungstülle relativ einfach und kraftaufwandsarm. Die einzelnen Teile des Hilfselements werden hierbei zur Befestigung aneinander zum Beispiel miteinander verschweißt oder mittels einer Steckverbindung miteinander verbunden

In den Fällen, in denen das Hilfselement einteilig und einstückig ausgestaltet ist, besteht die Dichtungstülle weiter bevorzugt aus genau zwei einstückigen Bauteilen, nämlich dem Tüllenkörper und dem Hilfselement. Auf diese Weise ist die Dichtungstülle einfach gehalten, was unter anderem die Mehrkosten gegenüber einem einfachen klassischen Tüllenkörper in Grenzen hält. Der Tüllenkörper ist - unabhängig von der Ausgestaltung des Hilfselements - auf alle Fälle einstückig ausgebildet.

Von Vorteil ist es des Weiteren, wenn die Dichtungstülle und insbesondere der Tüllenkörper als Radialdichtung und bevorzugt als Tülle für eine Kabeldurchführung ausgebildet ist und zwar insbesondere dann, wenn die Dichtungstülle für den Kraftfahrzeugbereich oder generell für Serienproduktionen vorgesehen ist. Gerade hier wirken sich auch kleinere Verbesserungen oder Erleichterungen bei einzelnen Fertigungsprozessschritten besonders günstig aus.

Zweckdienlicherweise sind der Tüllenkörper und das Hilfselement hinsichtlich ihrer geometrischen Gestaltung an die Geometrie der Öffnung und im Falle einer Kabeldurchführung auch an die Geometrie des vorgesehenen Kabelstrangs angepasst. Dementsprechend ist das Hilfselement beispielsweise bevorzugt ringförmig ausgestaltet, sofern die Dichtungstülle für eine runde Öffnung ausgelegt ist.

Weiter weist der Tüllenkörper vorzugsweise zumindest im Durchsteckbereich eine konische Grundform auf, wobei sich der Tüllenkörper bevorzugt entgegen der Montagerichtung konisch erweitert.

Außerdem weist das Hilfselement zumindest im montierten Zustand der Dichtungstülle eine konische Grundgeometrie auf, so dass sich das Hilfselement in eine entsprechende Öffnung, Materialaussparung oder Wandungsdurchbruch leichter einfügen und insbesondere regelrecht einfädeln lässt. Dabei weist das Hilfselement zumindest im montierten Zustand eine konische Grundgeometrie mit einem ersten Abschnitt und mit einem sich daran entgegen der Montagerichtung anschließenden zweiten Abschnitt auf, wobei der zweite Abschnitt einen maximalen Durchmesser aufweist, der größer ist als der maximale Durchmesser des ersten Abschnitts.

Hierbei gilt es zu bedenken, dass Tüllenkörper oder Dichtungen nach dem Stand der Technik typischerweise derart ausgelegt sind, dass diese zumindest in bestimmten Bereichen komprimiert werden müssen, damit diese in die vorgesehene Öffnung eingesetzt werden können. Die für das Einsetzen notwendige Kompression bedingt dabei in der Regel einen relativ hohen Kraftaufwand, wodurch das Einsetzen des Tüllenkörpers in eine entsprechende Materialaussparung relativ aufwendig und mitunter recht schwierig ist. Durch eine konische Grundgeometrie des Hilfselements erfolgt die notwendige Kompression quasi allmählich mit der Einführung der Dichtungstülle in die Öffnung, was das Einsetzen wiederum erleichtert.

In vorteilhafter Weiterbildung ist das Hilfselement konisch gestaltet mit dem ersten und mit dem sich entgegen der Montagerichtung daran anschließenden zweiten Abschnitt, wobei der erste Abschnitt einen maximalen Durchmesser oder eine maximale umfangseitige Ausdehnung aufweist, der bzw. die kleiner ist als die Öffnungsweite der Öffnung, und/oder wobei der zweite Abschnitt einen maximalen Durchmesser bzw. eine maximale umfangseitige Ausdehnung aufweist, der bzw. die größer ist als die Öffnungsweite der Öffnung. Der zweite Abschnitt ist dabei zweckdienlicherweise nach Art eines Federelements radial komprimierbar.

Günstig ist es weiter, wenn das Hilfselement zumindest teilweise auf einer Dichtlippe, einem Dichtring oder einer Dichtlamelle im Durchsteckbereich des Tüllenkörpers aufliegt und auf diese Weise insbesondere das Einführen oder Einsetzen der Dichtlippe, des Dichtrings bzw. der Dichtlamelle erleichtert.

Zu Gunsten einer einfachen Herstellung der Dichtungstülle ist das Hilfselement weiter auf den Tüllenkörper aufgesteckt. Gemäß einer Ausführungsvariante ist die Dichtungstülle zudem bevorzugt gebildet durch zwei separate Teile, die insbesondere lediglich form- oder reibschlüssig, nicht jedoch stoffschlüssig miteinander verbunden sind.

In vorteilhafter Weiterbildung ist das Hilfselement über eine Dichtlippe des Tüllenkörpers gestülpt, wobei das Hilfselement einerseits und die Dichtlippe des Tüllenkörpers andererseits bevorzugt ringförmig und/oder konisch ausgestaltet sind.

Des Weiteren weist das Hilfselement unabhängig davon, ob dieses mehrteilig oder einteilig ausgebildet ist, zumindest zwei geometrische Grundelemente oder Grundkörper auf, die sich insbesondere hinsichtlich ihrer Funktion unterscheiden. So weist das Hilfselement in jedem Fall eine Basis, insbesondere eine ringförmige Basis, auf. An dieser Basis sind mehrere, insbesondere mehr als zehn, Finger angeformt oder befestigt, die den Gleitbereich ausbilden oder zumindest mitausbilden. Die Finger bilden zudem ein Rastelement aus zur Verrastung der Dichtungstülle in der Öffnung.

In einigen Fällen sind zudem an der Basis mehrere, insbesondere mehr als zehn, Stege angeformt oder befestigt, die den Gleitbereich ausbilden oder zumindest mitausbilden.

Dabei sind die Finger und/oder die Stege, sofern vorgesehen, weiter bevorzugt über den Umfang der ringförmigen Basis des Hilfselements verteilt angeordnet und die nach außen gerichteten Oberflächen der Finger und/oder der Stege bilden einen aus mehreren Gleitflächen zusammengesetzten Gleitbereich aus.

Außerdem ist es günstig, wenn die Versteifungsstege im ersten Abschnitt und die Finger im zweiten Abschnitt des Hilfselements ausgebildet sind und wenn der erste Abschnitt auf einem Ringsteg des Tüllenkörpers aufliegt und der zweite Abschnitt auf einer Dichtlippe im Durchsteckbereich Tüllenkörpers.

Von Vorteil ist es zudem, wenn die Finger Federelemente ausbilden, die beim Einsetzen der Dichtungstülle zunächst einfedern und nachfolgend wieder ausfedern, sobald die Dichtungstülle ihre Montageendposition in einer entsprechenden Öffnung erreicht hat. In vorteilhafter Weiterbildung bilden die Finger, die zum Beispiel als leisten- oder plattenförmig ausgestaltet sind, dann gemeinsam eine Federeinheit aus, die insbesondere eine konische Grundgeometrie zeigt.

Die Stege wiederum dienen günstigerweise zudem als Versteifungsstege für das Hilfselement, so dass mit deren Hilfe zumindest ein Bereich des Hilfselements, nämlich die Basis, eine relativ formstabile Struktur aufweist.

Weiter ist das Hilfselement gemäß einer Ausführungsvariante als reine Montagehilfe ausgebildet und dementsprechend wird das Hilfselement in diesem Fall nach dem Einsetzen der Dichtungstülle in eine entsprechende Materialaussparung vom Tüllenkörper entfernt und aus der Materialaussparung herausgenommen oder von dieser weggeführt. Hierbei ist es zudem günstig, wenn das Hilfselement als wiederverwendbare oder wiederholt einsetzbare Montagehilfe ausgebildet ist, die für mehrere Montageprozesse, also als Hilfe zum Einsetzen mehrere Tüllenkörper, eingesetzt werden kann.

Alternativ wird das Hilfselement nach einem Einsetzen in eine entsprechende Materialaussparung nicht wieder entfernt und in einem solchen Fall bilden dann das Tüllenkörper und das Hilfselement eine Art Dichteinheit aus, insbesondere eine Kabeldurchführung.

In beiden Fällen wird das Hilfselement dabei bevorzugt beim Einsetzen der Dichtungstülle durch die Öffnung vollständig hindurch geführt. Dementsprechend ist das Hilfselement im Gegensatz zum Tüllenkörper im Montageendzustand vollständig außerhalb der Öffnung oder des Wandungsdurchbruches positioniert und trägt somit nicht zur Abdichtung oder Auffüllung der Öffnung nicht bei.

Weiter ist die Dichtungstülle mit Hilfe des Hilfselements und in einigen Fällen zusätzlich mit Hilfe des Tüllenkörpers im Montageendzustand in der Öffnung quasi verrastet. Dabei bilden dabei die zuvor erwähnten Finger ein Rastelement aus, wobei die Finger im verrasteten Zustand eine widerhakenähnliche Wirkung bedingen, wenn versucht wird, die Dichtungstülle wieder aus der entsprechenden Öffnung, der Materialaussparung oder aus dem entsprechenden Wandungsdurchbruch herauszuziehen.

Des Weiteren ist es vorteilhaft, das Hilfselement und das Tüllenkörper miteinander zu verbinden, also beispielsweise miteinander zu verkleben. Alternativ ist die Verbindung als lösbare Verbindung und insbesondere als formschlüssige Verbindung ausgebildet, wobei das Hilfselement beispielsweise mittels einer Spundung am Tüllenkörper befestigt ist. Günstig ist auch eine Rastverbindung, wobei hier eine Kombination aus Spundung und Rastverbindung bevorzugt wird. In diesem Fall ist dann die entsprechende Nut der Spundung mit einem Hinterschnitt versehen und der Gegenpart weist einen entsprechenden Vorsprung auf, der nach Ausbildung der Spundung in den Hinterschnitt hineinragt.

Weiter wird für die Herstellung des Tüllenkörpers bevorzugt ein Elastomer genutzt und/oder vulkanisierter Kautschuk verwendet. Hierbei ist es zudem günstig, wenn der Tüllenkörper aus einem einzigen Werkstoff hergestellt ist.

Gemäß einer weiteren Ausführungsvariante ist der Tüllenkörper als Schaumteil ausgebildet und zum Beispiel aus einem Polyurethan (PUR) hergestellt.

Auch das Hilfselement ist bevorzugt aus einem einzigen Werkstoff hergestellt, wobei bevorzugt Kunststoffe wie beispielsweise Polyoxymethylen (POM) verwendet werden. Alternativ ist das Hilfselement aus einem Metall hergestellt.

Ausführungsbeispiele der Erfindung werden nachfolgend anhand einer schematischen Zeichnung näher erläutert. Darin zeigen:
- FIG 1: in einer perspektivischen Ansicht eine Dichtungstülle aus einem Tüllenkörper und einem Hilfselement,
- FIG 2: in einer perspektivischen Ansicht das Hilfselement,

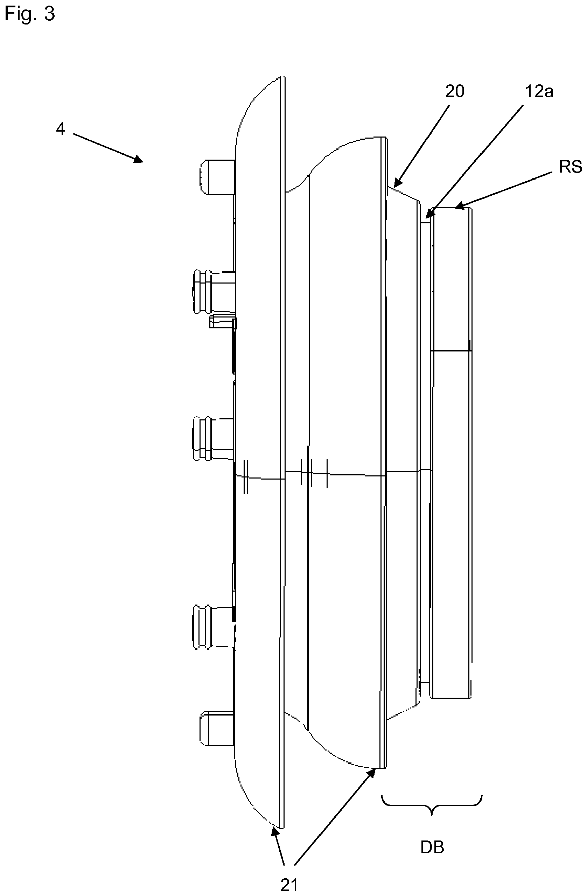

- FIG 3: in einer Seitenansicht der Tüllenkörper,

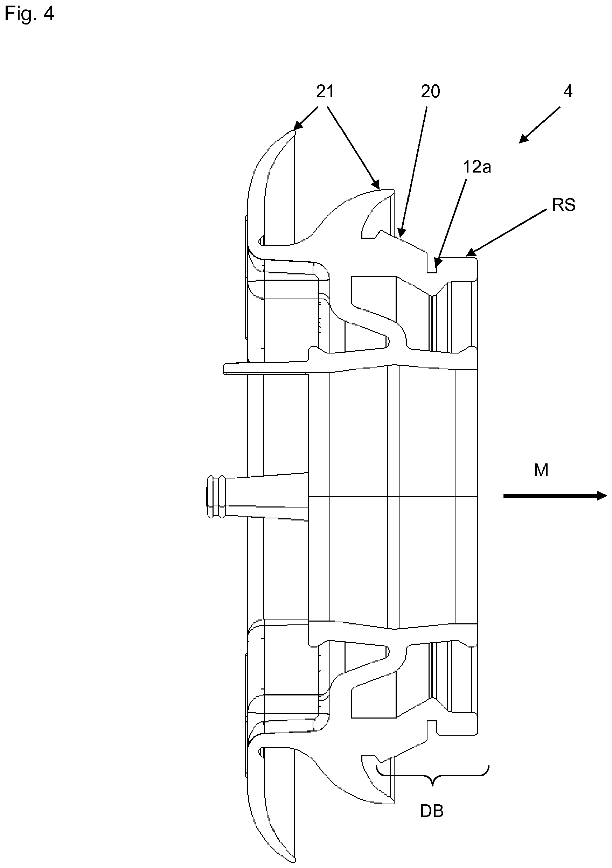

- FIG 4: in einer Schnittdarstellung der Tüllenkörper,

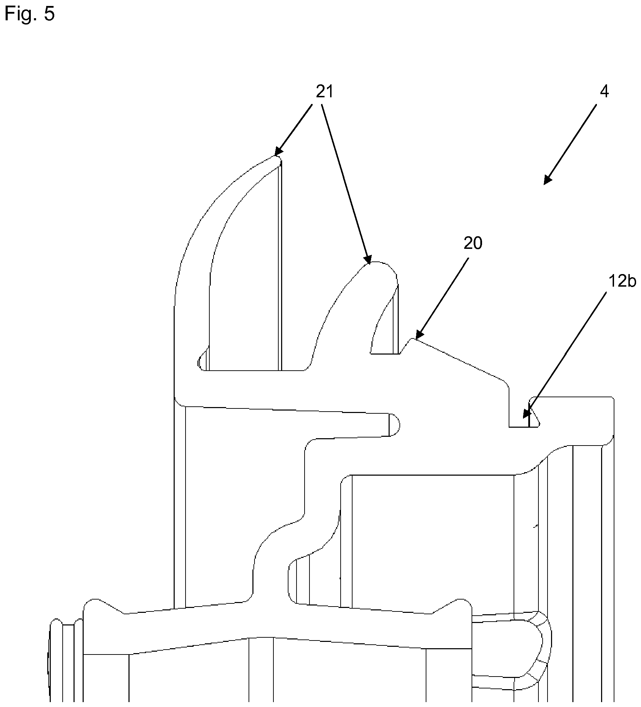

- FIG 5: in einer teilweisen Schnittdarstellung eine alternative Ausgestaltung des Tüllenkörpers einer zweiten Ausführungsvariante der Dichtungstülle,
- FIG 6: in einer teilweisen Schnittdarstellung eine dritte Ausführungsvariante der Dichtungstülle,
- FIG 7: in einer teilweisen Schnittdarstellung die dritte Ausführungsvariante der Dichtungstülle in einer Einbausituation mit zwei Wandungsdurchbrüchen,

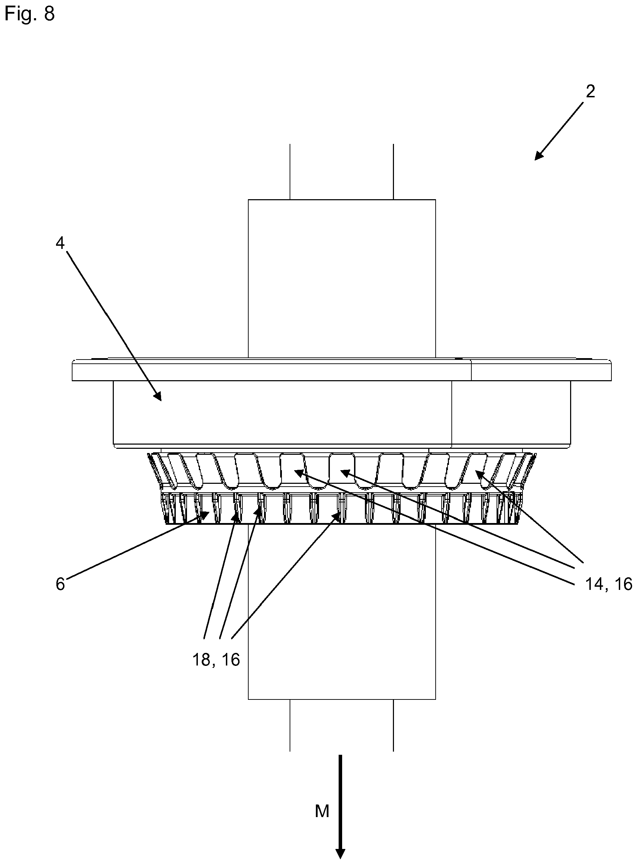

- FIG 8: in einer Seitenansicht eine vierte Ausführungsvariante der Dichtungstülle zusammen mit einem Kabel sowie
- FIG 9: in einer Schnittdarstellung die vierte Ausführungsvariante der Dichtungstülle zusammen mit dem Kabel.

Einander entsprechende Teile sind in allen Figuren jeweils mit den gleichen Bezugszeichen versehen.

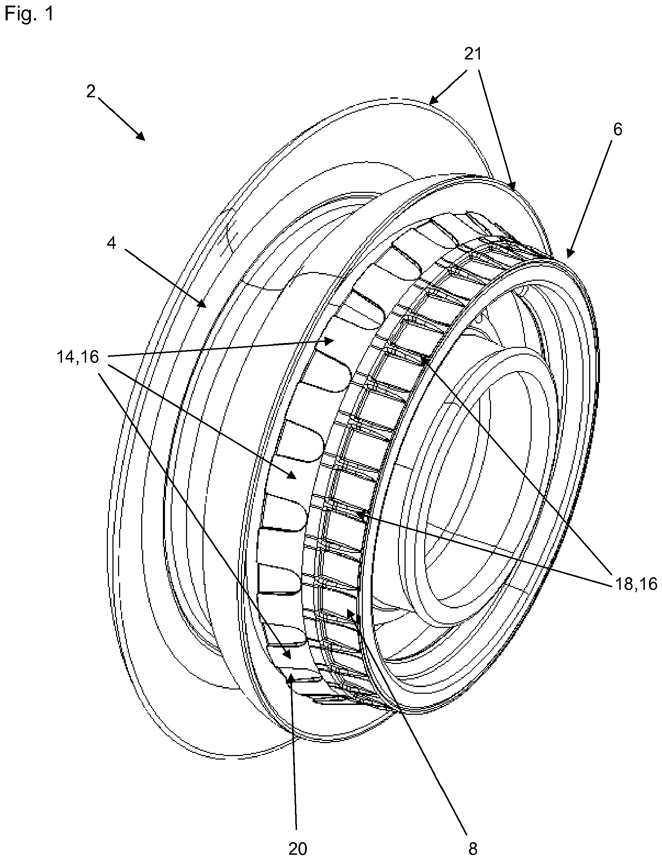

Die nachfolgend exemplarisch beschriebenen Dichtungstüllen 2 sind für Kabeldurchführungen 1 für den Kraftfahrzeugbereich ausgestaltet und jeweils für runde Öffnungen mit definierter Öffnungsweite ausgelegt. Jede dieser Dichtungstüllen 2 umfasst dabei ein Tüllenkörper 4, der beispielsweise als Polyurethan-Schaumteil und somit als einstückiges Bauteil ausgebildet oder aus Gummi gefertigt ist. Auf den Tüllenkörper 4 ist, so wie in Fig. 1 dargestellt, ein Hilfselement 6 aufgesteckt, welches ebenfalls einstückig und einteilig ausgestaltet ist, jedoch aus einem härteren Material, zum Beispiel Polyoxymethylen, besteht.

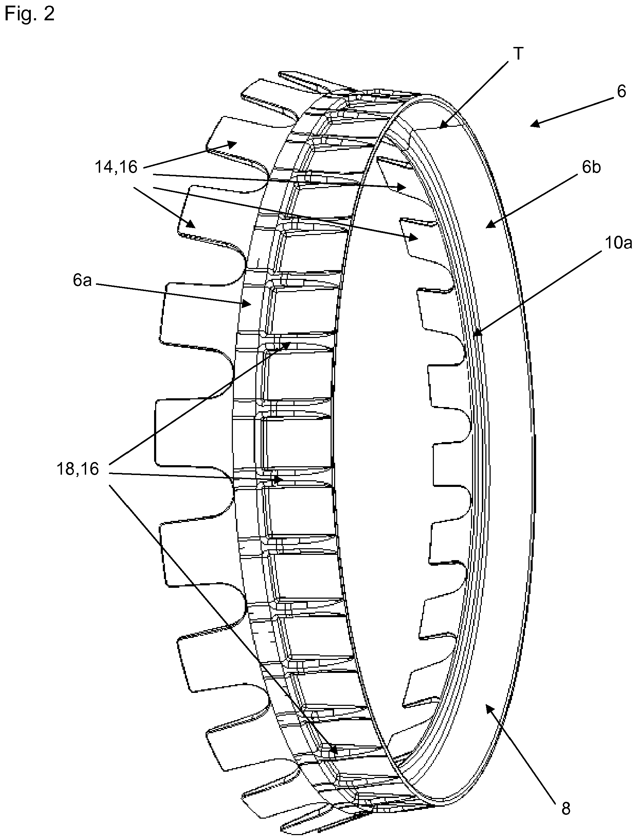

Einer alternativen Ausführung entsprechend ist das Hilfselement 6 aus zwei halbringförmigen oder halbschalenförmigen Umfangssegmenten 6a,6b zusammengesetzt, die bei der Montage einer Dichtungstülle 2 umfangsseitig an den Tüllenkörper 4 der Dichtungstülle 2 angelegt und nachfolgend miteinander verbunden werden. In Fig. 2 ist eine derartige Ausführung dargestellt, wobei die Schnittstelle zwischen den beiden Umfangssegmenten 6a,6b des Hilfselements 6 durch eine Trennlinie T angedeutet ist.

Weiter weist das Hilfselement 6 als einen geometrischen Grundkörper eine ringförmige, hohlzylinderartige Basis 8 auf, die im aufgesteckten Zustand auf einem Ringsteg RS des Tüllenkörpers aufliegt und an deren Innenseite eine ringförmige Feder 10 angeformt ist. Diese Feder 10a greift im aufgesteckten Zustand des Hilfselements 6 in eine Nut 12a am Tüllenkörper 4 ein, so dass der Tüllenkörper 4 und das Hilfselement 6 durch eine Spundung miteinander verbunden sind.

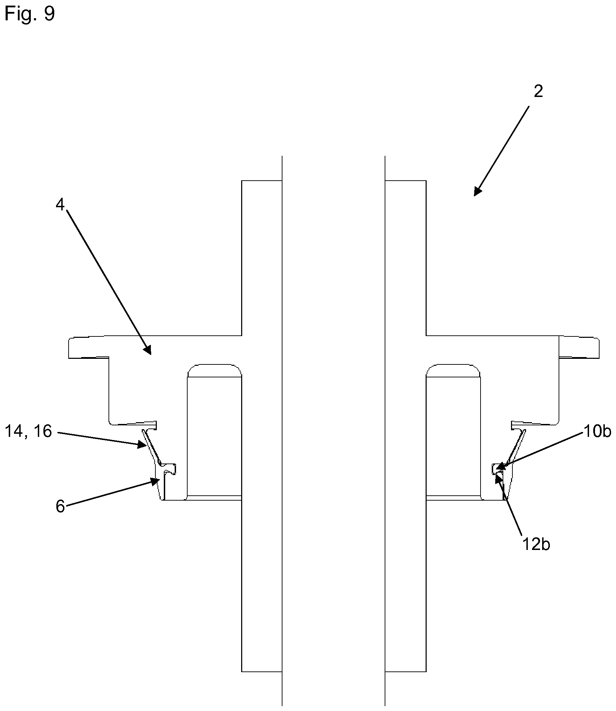

Eine alternative Verbindungsvariante ist in der Schnittdarstellung in Fig. 9 angedeutet, wobei hier am Tüllenkörper 4 eine Nut 12b mit einer Hinterschneidung ausgebildet ist. Ergänzend hierzu weist dann die dazugehörige Feder 10b einen komplementären Vorsprung auf, der in die Hinterschneidung hinein ragt, so dass in diesem Fall zwischen dem Tüllenkörper 4 und dem Hilfselement 6 eine Kombination aus Spundung und Rastverbindung ausgebildet ist.

An die ringförmige Basis 8 des Hilfselements 6 gemäß Fig. 2 sind ähnlich wie bei einer Krone mehrere insbesondere plattenförmige Finger 14, Zähne oder Zacken angeformt, die leicht nach außen gebogen sind und dem Hilfselement 6 somit eine konische Grundgeometrie verleihen. Die nach außen gerichtete Oberfläche eines jeden Fingers 14 bildet eine Gleitfläche 16 mit einem geringen Reibungskoeffizienten aus. Die Gleitflächen 16 sind dabei nach Art einer Gleichteilung gleichmäßig über den Umfang des Hilfselements 6 verteilt angeordnet und sind zudem Teil eines Gleitbereichs oder einer Gleitgesamtfläche, durch die das Einsetzen der Dichtungstülle in eine dafür vorgesehene Öffnung erleichtert ist.

Teil dieses Gleitbereichs sind außerdem die nach außen gerichteten Oberflächen mehrerer Versteifungsstege 18, die ebenfalls gleichmäßig über den Umfang des Hilfselements 6 verteilt angeordnet und außenseitig an der Basis 8 angeformt sind. Die Versteifungsstege 18 sind hierbei nach Art kleiner Rampen ausgebildet und tragen somit zur konischen Grundgeometrie des Hilfselements 6 bei.

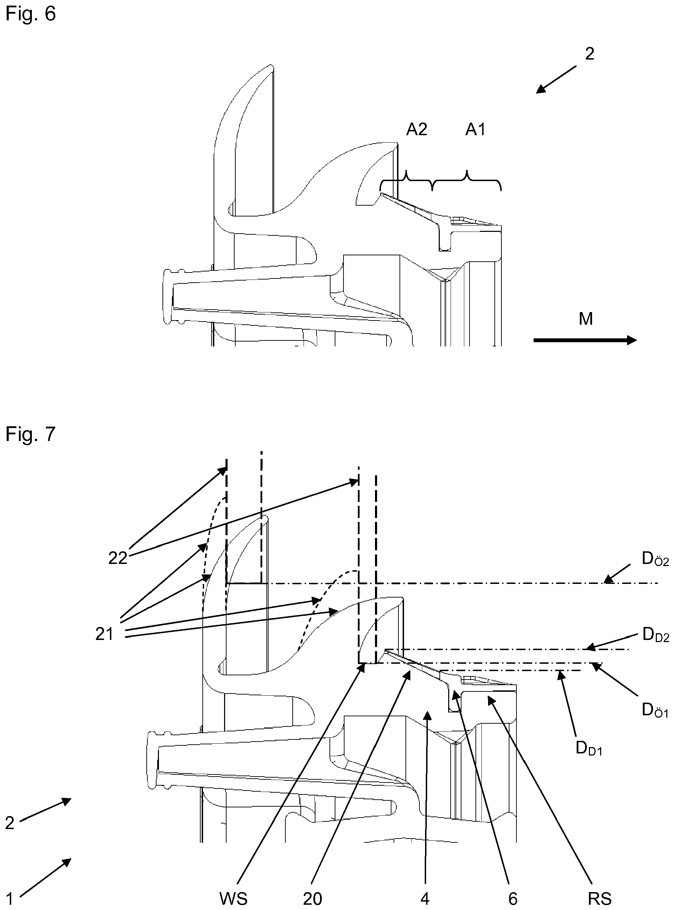

Aufgrund der konischen Grundgeometrie des Hilfselements 6 sowie aufgrund der Form des Tüllenkörpers 4 weist das Hilfselements 6 im aufgesteckten Zustand einen ersten durch die Finger 14 ausgebildeten Abschnitt A2 und einen zweiten durch die Basis 8 mit den Versteifungsstegen 18 ausgebildeten Abschnitt A1 auf, wobei der erste Abschnitt A1 einen maximalen Durchmesser D_{D1} aufweist, der kleiner ist als der Durchmesser D_{Ö1} der Öffnung, und wobei der zweite Abschnitt A2 einen maximalen Durchmesser D_{D2} aufweist, der größer ist als der Durchmesser D_{Ö1} der Öffnung. In Fig. 7 sind die Relationen durch Strich-Punkt-Linien angedeutet. Die Durchmesser D_{D1} und D_{D2} des Hilfselements 6 entsprechen dabei den dazugehörigen Durchmessern D_{D1} und D_{D2} der Dichtungstülle 2.

Diese Relation gilt sinngemäß auch für den Tüllenkörper 4, wobei hier der Abschnitt, auf dem im aufgesteckten Zustand der erste Abschnitt A1 des Hilfselements 6 aufliegt, einen maximalen Durchmesser aufweist, der kleiner ist als der Durchmesser D_{Ö1} der Öffnung, und wobei der Abschnitt, auf dem im aufgesteckten Zustand der zweite Abschnitt A2 des Hilfselements 6 aufliegt, einen maximalen Durchmesser aufweist, der größer ist als der Durchmesser D_{Ö1} der Öffnung.

Die Finger 14 liegen im aufgesteckten Zustand des Hilfselements 6 auf einer Dichtlippe 20 des Tüllenkörpers 4 auf und dementsprechend ist Hilfselement 6 zumindest teilweise über die Dichtlippe 20 des Tüllenkörpers 4 gestülpt. Die Dichtlippe 20 weist hierbei ein rampenförmiges Profil auf und erweitert sich konisch entgegen einer Montagerichtung M.

Beim Einsetzen der Dichtungstülle 2 in Montagerichtung M in einen entsprechenden Wandungsdurchbruch trifft die Dichtungstülle 2 mit der Dichtlippe 20 und den aufliegenden Fingern 14 auf eine ringförmige durch eine Wandung 22 begrenzte Öffnung, deren Durchmesser D_{Ö1} kleiner ist, als der maximale Durchmesser D_{D2} der Dichtungstülle 2 im Bereich der Dichtlippe 20. Diese Dichtlippe liegt im Durchsteckbereich DB der bei der Montage durch die Öffnung hindurchgeführt wird. Beim Einpressen oder Durchpressen der Dichtungstülle 2 oder vielmehr des Durchsteckbereichs DB durch die Öffnung werden daher die Finger 14 eingefedert und komprimieren dabei die Dichtlippe 20, bis die Dichtungstülle 2 in diesem Bereich einen Durchmesser kleiner gleich dem Durchmesser D_{Ö1} der Öffnung aufweist. Nach dem Durchtritt des Durchsteckbereichs DB durch diese Öffnung federn die Finger 14 wieder aus und die Dichtlippe 20 dehnt sich auf ihren ursprünglichen Umfang aus, so dass die Dichtlippe 20 einerseits und die Finger 14 andererseits die Öffnung hintergreifen, wodurch die Dichtungstülle 2, wie im Ausführungsbeispiel gemäß Fig. 7 angedeutet, in dem Wandungsdurchbruch verrastet ist.

Im Ausführungsbeispiel gemäß Fig. 7 dient die Dichtungstülle 2 zur Ausbildung einer Kabeldurchführung durch zwei Wandungen 22, wobei die jeweiligen Öffnungen unterschiedlich große Durchmesser D_{Ö1}, D_{Ö2} aufweisen. Im Montageendzustand, angedeutet durch gestrichelte Linien, liegt dann an jeder der beiden Wandungen 22 eine tellerartige Dichtlippe 21 flächig an und eine der Wandungen 22 ist quasi zwischen zwei Dichtlippen 20, 21, also einer tellerartigen Dichtlippe 21 und der Dichtlippe 20 mit dem rampenförmigen Profil, eingeklemmt. Diese Wandung 22 liegt dabei auf einem ring- oder zylinderförmigen Abschnitt des Tüllenkörpers 4 auf, der als Wandungssitz WS zwischen der tellerartigen Dichtlippe 21 und der Dichtlippe 20 mit dem rampenförmigen Profil positioniert ist. Die beiden tellerartigen oder tellerförmigen Dichtlippen 21 dienen dabei nicht nur als Flüssigkeitsbarriere, sondern auch als Stützelemente, die flächig an den Wandungen 22 anliegen.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung zu verlassen.

### Bezugszeichenliste

- 1: Kabeldurchführung
- 2: Dichtungstülle
- 4: Tüllenkörper
- 6: Hilfselement
- 6a,6b: Umfangssegment
- 8: Basis
- 10a/10b: Feder
- 12a/12b: Nut
- 14: Finger
- 16: Gleitfläche
- 18: Versteifungsstege
- 20: Dichtlippe
- 21: tellerförmige Dichtlippe
- 22: Wandung

- M: Montagerichtung
- T: Trennlinie
- DB: Durchsteckbereich
- RS: Ringsteg
- WS: Wandungssitz
- A1: erster Abschnitt
- A2: zweiter Abschnitt

- D_{Ö1}: Durchmesser Öffnung 1/Wandungsdurchbruch 1
- D_{Ö2}: Durchmesser Öffnung 2/Wandungsdurchbruch 2
- D_{D1}: Durchmesser Dichtungstülle im Abschnitt A1
- D_{D2}: Durchmesser Dichtungstülle im Abschnitt A2

## Patentansprüche

1. Dichtungstülle (2) für eine abgedichtete Durchführung eines strangförmigen Elements durch eine Wandung (22), welche zum Einsetzen in Montagerichtung (M) in eine durch die Wandung (22) begrenzte Öffnung mit einer vorgegebenen Öffnungsweite (D_{Ö1}) ausgebildet ist und einen Tüllenkörper (4) mit einem sich in Montagerichtung (M) erstreckenden Durchsteckbereich (DB) aufweist, der bei der Montage in Montagerichtung (M) durch die Öffnung hindurchgeführt wird, derart, dass dieser die Wandung (22) im montierten Zustand hintergreift, wobei
- der Tüllenkörper (4) einstückig ausgebildet ist,
- ein das Einsetzen in die Öffnung erleichterndes Hilfselement (6) mit einem zumindest eine Gleitfläche (16) umfassenden umfangsseitigen Gleitbereich vorgesehen ist, wobei die zumindest eine Gleitfläche (16) auf einer umfangsseitigen Oberfläche des Durchsteckbereichs (DB) zumindest teilweise aufliegt,
- das Hilfselement (6) zumindest im montierten Zustand eine konische Grundgeometrie mit einem ersten Abschnitt (A1) und mit einem sich daran entgegen der Montagerichtung (M) anschließenden zweiten Abschnitt (A2) aufweist, wobei der zweite Abschnitt (A2) einen maximalen Durchmesser (D_{D2}) aufweist, der größer ist als der maximale Durchmesser (D_{D1}) des ersten Abschnitts (A1), und
- das Hilfselement (6) eine Basis (8) aufweist, an der mehrere Finger (14) angeformt sind, die den Gleitbereich ausbilden oder zumindest mitausbilden, wobei die Finger (14) ein Rastelement ausbilden zur Verrastung der Dichtungstülle (2) in der Öffnung,
**dadurch gekennzeichnet,**
**dass** das Hilfselement (6) auf den Tüllenkörper (4) aufgesteckt ist.

2. Dichtungstülle (2) nach Anspruch 1,
**dadurch gekennzeichnet,**
**dass** der Tüllenkörper (4) im Durchsteckbereich (DB) eine maximale umfangsseitige Ausdehnung (D_{D2}) aufweist, die größer oder gleich der Öffnungsweite (D_{Ö1}) der Öffnung ist, so dass die Gleitfläche (16) beim Einsetzen an der die Öffnung begrenzenden Wandung (22) entlang gleitet.

3. Dichtungstülle (2) nach Anspruch 1 oder 2,
**dadurch gekennzeichnet,**
**dass** sich der Tüllenkörper (4) im Durchsteckbereich (DB) entgegen der Montagerichtung (M) konisch erweitert.

4. Dichtungstülle (2) nach einem der Ansprüche 1 bis 3,
**dadurch gekennzeichnet,**
**dass** der Gleitbereich aus einem härteren Material hergestellt ist als der Tüllenkörper (4).

5. Dichtungstülle (2) nach einem der Ansprüche 1 bis 4,
**dadurch gekennzeichnet,**
**dass** das Hilfselement (6) derart aus Umfangssegmenten (6a,6b) zusammengesetzt ist, dass diese bei der Montage umfangsseitig an den Tüllenkörper (4) anlegbar und nachfolgend aneinander befestigbar sind.

6. Dichtungstülle (2) nach einem der Ansprüche 1 bis 4,
**dadurch gekennzeichnet,**
**dass** diese aus zwei einstückigen Bauteilen besteht, nämlich dem Tüllenkörper (4) und dem Hilfselement (6).

7. Dichtungstülle (2) nach einem der Ansprüche 1 bis 6,
**dadurch gekennzeichnet,**
**dass** das Hilfselement (6) ringförmig ausgestaltet ist und mehrere über den Umfang verteilt angeordnete Finger (14) aufweist, die im montierten Zustand auf dem Durchsteckbereich (DB) aufliegen.

8. Dichtungstülle (2) nach einem der Ansprüche 1 bis 7,
**dadurch gekennzeichnet,**
**dass** das Hilfselement (6) ringförmig ausgestaltet ist und mehrere über den Umfang verteilt angeordnete Versteifungsstege (18) aufweist.

9. Dichtungstülle (2) nach einem der Ansprüche 1 bis 8,
**dadurch gekennzeichnet,**
**dass** die Versteifungsstege (18) im ersten Abschnitt (A1) und die Finger (14) im zweiten Abschnitt (A2) des Hilfselements (6) ausgebildet sind, und dass der erste Abschnitt (A1) auf einem Ringsteg (RS) des Tüllenkörpers (4) aufliegt.

10. Dichtungstülle (2) nach einem der Ansprüche 1 bis 9,
**dadurch gekennzeichnet,**
**dass** das Hilfselement (6) abnehmbar oder in Montagerichtung (M) von dem Tüllenkörper (4) abziehbar ist, derart, dass nach erfolgter Montage das Hilfselement (6) nach Art einer wiederholbar abnehmbaren Montagehilfe entfernbar ist.

11. Dichtungstülle (2) nach einem der Ansprüche 1 bis 10,
**dadurch gekennzeichnet,**
**dass** das Hilfselement (6) ringförmig ausgestaltet ist und mehrere über den Umfang verteilt angeordnete Finger (14) aufweist, wobei die Finger (14) Widerhaken bilden, sobald das Hilfselement (6) zusammen mit dem Tüllenkörper (4) in der Öffnung verrastet ist.

12. Dichtungstülle (2) nach einem der Ansprüche 1 bis 11,
**dadurch gekennzeichnet,**
**dass** der Tüllenkörper (4) entgegen der Montagerichtung (M) angrenzend an den Durchsteckbereich (DB) einen ringnutartigen Wandungssitz (WS) zur Aufnahme der Wandung (22) aufweist.

13. Dichtungstülle (2) nach einem der Ansprüche 1 bis 12,
- **dadurch gekennzeichnet,**
**dass** der Tüllenkörper (4) aus Gummi hergestellt oder als Schaumteil (4) ausgebildet ist.

14. Kabeldurchführung (1) durch eine Wandung (22) mit einer Öffnung in der Wandung (22) und mit einer in die Öffnung eingesetzten Dichtungstülle (2) nach einem der vorherigen Ansprüche.

## Claims

1. Sealing grommet (2) for a sealed passage of a strand-like element through a wall (22), which is formed for insertion in the mounting direction (M) into an opening with a predetermined opening width (Dö1) bounded by the wall (22) and has a grommet body (4) with a push-through region (DB) extending in the mounting direction (M), which is guided through the opening in the mounting direction (M) during assembly, in such a way that it engages behind the wall (22) in the assembled state, wherein :
- the grommet body (4) is formed in one piece,
- an auxiliary element (6) facilitating insertion into the opening is provided with a circumferential sliding region comprising at least one sliding surface (16), wherein the at least one sliding surface (16) rests at least partially on a circumferential surface of the push-through region (DB),
- the auxiliary element (6), at least in the assembled state, has a conical basic geometry with a first section (A1) and with a second section (A2) adjoining said first section opposite the mounting direction (M), wherein the second section (A2) has a maximum extension (Do2), which is larger than the maximum diameter (001) of the first section (A1), and the auxiliary element (6) has a base (8) on which a plurality of fingers (14) are integrally formed which form or at least co-form the sliding region, the fingers (14) forming a latching element for latching the sealing grommet (2) in the opening,
**characterized in**
**that** the auxiliary element (6) is plugged onto the grommet body (4).

2. Sealing grommet (2) according to claim 1,
**characterized in**
**that**, in the push-through region (DB), the grommet body (4) has a maximum circumferential extension (Do2), which is greater than or equal to the opening width (Dö1) of the opening, so that the sliding surface (16) during insertion slides along the wall (22) bounding the opening.

3. Sealing grommet (2) according to claim 1 or 2,
**characterized in**
**that** the grommet body (4) widens conically in the push-through region (DB) counter to the mounting direction (M).

4. Sealing grommet (2) according to one of claims 1 to 3,
**characterized in**
**that** the sliding region is made of a harder material than the grommet body (4).

5. Sealing grommet (2) according to one of claims 1 to 4,
**characterized in**
**that** the auxiliary element (6) is composed of circumferential segments (6a, 6b) in such way that, during assembly, said circumferential segments can circumferentially be placed against the grommet body (4) and can be fastened subsequently to one another.

6. Sealing grommet (2) according to one of claims 1 to 4,
**characterized in**
**that** it consists of two one-piece components, namely the grommet body (4) and the auxiliary element (6).

7. Sealing grommet (2) according to one of claims 1 to 6,
**characterized in**
**that** the auxiliary element (6) is of annular design and has a plurality of fingers (14) distributed over the circumference, which in the assembled state rest on the push-through region (DB).

8. Sealing grommet (2) according to one of claims 1 to 7,
**characterized in**
**that** the auxiliary element (6) is of annular design and has a plurality of stiffening webs (18) distributed over the circumference.

9. Sealing grommet (2) according to one of claims 1 to 8,
**characterized in**
**that** the stiffening webs (18) are formed in the first section (A1) and the fingers (14) are formed in the second section (A2) of the auxiliary element (6), and that the first section (A1) rests on an annular web (RS) of the grommet body (4).

10. Sealing grommet (2) according to one of claims 1 to 9,
**characterized in**
**that** the auxiliary element (6) is detachable or removable from the grommet body (4) in the mounting direction (M) in such way that, after mounting, the auxiliary element (6) can be removed in the manner of a repeatedly detachable mounting aid.

11. Sealing grommet (2) according to one of claims 1 to 10,
**characterized in**
**that** the auxiliary element (6) is of annular design and has a plurality of fingers (14) distributed over the circumference, the fingers (14) forming barbs as soon as the auxiliary element (6) is locked together with the grommet body (4) in the opening.

12. Sealing grommet (2) according to any of claims 1 to 11,
**characterized in**
**that** opposite to the mounting direction (M), adjacent to the push-through region (DB), the grommet body (4) has an annular groove-like wall seat (WS) for receiving the wall (22).

13. Sealing grommet (2) according to one of claims 1 to 12,
**characterized in**
**that** the grommet body (4) is made of rubber or is designed as a foam part (4).

14. Cable bushing (1) through a wall (22) with an opening in the wall (22) and with a sealing grommet inserted into the wall according to one of the previous claims.

## Revendications

1. Passe-câble d'étanchéité (2) pour un passage étanchéifié d'un élément en forme de cordon à travers une paroi (22), qui est conçu pour être inséré dans la direction de montage (M) dans une ouverture ayant une largeur d'ouverture prédéterminée (Dö1) délimitée par la paroi (22) et comporte un corps de passe-câble (4) avec une zone de passage (DB) s'étendant dans la direction de montage (M), qui est guidée travers l'ouverture dans la direction de montage (M) lors du montage, de telle sorte qu'elle s'engage derrière la paroi (22) à l'état monté, dans lequel :
- le corps de passe-câble (4) est formé d'une seule pièce,
- un élément auxiliaire (6) facilitant l'insertion dans l'ouverture est pourvu d'une zone de glissement circonférentielle comprenant au moins une surface de glissement (16), la au moins une surface de glissement (16) reposant au moins partiellement sur une surface circonférentielle de la zone de passage (DB),
- l'élément auxiliaire (6), au moins à l'état monté, comprend une géométrie de base conique avec une première section (A1) et une deuxième section (A2) se raccordant à ladite première section à l'opposé de la direction de montage (M), la deuxième section (A2) ayant une extension maximal (Do2), qui est plus grand que le diamètre maximal (001) de la première section (A1), et l'élément auxiliaire (6) comprend une base (8) sur laquelle sont formés plusieurs doigts (14) qui forment ou au moins co-forment la zone de glissement, les doigts (14) formant un élément d'encliquetage pour l'encliquetage du passe-câble d'étanchéité (2) dans l'ouverture,
**caractérisé en ce**
**que** l'élément auxiliaire (6) est enfiché sur le corps de passe-câble (4).

2. Passe-câble d'étanchéité (2) selon la revendication 1,
**caractérisé en ce**
**que**, dans la zone de passage (DB), le corps de passe-câble (4) a une extension circonférentielle maximale (Do2) qui est supérieure ou égale à la largeur de l'ouverture (Dö1) de l'ouverture, de sorte que la surface de glissement (16) glisse le long de la paroi (22) délimitant l'ouverture lors de l'insertion.

3. Passe-câble d'étanchéité (2) selon la revendication 1 ou 2,
**caractérisé en ce**
**que** le corps de passe-câble (4) s'élargit de manière conique dans la zone de passage (DB) dans le sens contraire à la direction de montage (M).

4. Passe-câble d'étanchéité (2) selon l'une des revendications 1 à 3,
**caractérisé en ce**
**que** la zone de glissement est faite d'un matériau plus dur que le corps de passe-câble (4).

5. Passe-câble d'étanchéité (2) selon l'une des revendications 1 à 4,
**caractérisé en ce**
**que** l'élément auxiliaire (6) est composé de segments circonférentiels (6a, 6b) de telle sorte que, lors du montage, lesdits segments circonférentiels peuvent être placés circonférentiellement contre le corps de passe-câble (4) et peuvent être fixés ultérieurement les uns aux autres.

6. Passe-câble d'étanchéité (2) selon l'une des revendications 1 à 4,
**caractérisé en ce**
**qu'**il est constitué de deux éléments d'une seule pièce, à savoir le corps de passe-câble (4) et l'élément auxiliaire (6).

7. Passe-câble d'étanchéité (2) selon l'une des revendications 1 à 6,
**caractérisé en ce**
**que** l'élément auxiliaire (6) est de forme annulaire et comporte une pluralité de doigts (14) qui sont répartis sur la circonférence et qui, à l'état monté, reposent sur la zone de passage (DB).

8. Passe-câble d'étanchéité (2) selon l'une des revendications 1 à 7,
**caractérisé en ce**
**que** l'élément auxiliaire (6) est de forme annulaire et comporte une pluralité de nervures de renforcement (18) réparties sur la circonférence.

9. Passe-câble d'étanchéité (2) selon l'une des revendications 1 à 8,
**caractérisé en ce**
**que** les nervures de renforcement (18) sont formées dans la première section (A1) et les doigts (14) sont formés dans la deuxième section (A2) de l'élément auxiliaire (6), et que la première section (A1) repose sur une nervure annulaire (RS) du corps de passe-câble (4).

10. Passe-câble d'étanchéité (2) selon l'une des revendications 1 à 9,
**caractérisé en ce**
**que** l'élément auxiliaire (6) est détachable ou amovible du corps de passe-câble (4) dans la direction de montage (M) de telle sorte qu'après le montage, l'élément auxiliaire (6) peut être retiré à la manière d'une aide au montage détachable à plusieurs reprises.

11. Passe-câble d'étanchéité (2) selon l'une des revendications 1 à 10,
**caractérisé en ce**
**que** l'élément auxiliaire (6) est de forme annulaire et comporte une pluralité de doigts (14) répartis sur la circonférence, les doigts (14) formant des barbes dès que l'élément auxiliaire (6) est verrouillé avec le corps de passe-câble (4) dans l'ouverture.

12. Passe-câble d'étanchéité (2) selon l'une des revendications 1 à 11,
**caractérisé en ce**
**que** dans le sens opposé à la direction de montage (M), à côté de la zone de passage (DB), le corps de passe-câble (4) comprend un siège de paroi (WS) en forme de rainure annulaire pour recevoir la paroi (22).

13. Passe-câble d'étanchéité (2) selon l'une des revendications 1 à 12,
**caractérisé en ce**
**que** le corps de passe-câble (4) est en caoutchouc ou est conçu comme une pièce en mousse (4).

14. Passage de câble (1) à travers une paroi (22) avec une ouverture dans la paroi (22) et avec un passe-câble d'étanchéité inséré dans la paroi selon l'une des revendications précédentes.
